(19)

**Europäisches Patentamt**
**European Patent Office**
**Office européen des brevets**

(11) **EP 4 563 275 A1**

(12) **EUROPEAN PATENT APPLICATION**
published in accordance with Art. 153(4) EPC

(43) Date of publication:
**04.06.2025 Bulletin 2025/23**

(21) Application number: **23868133.2**

(22) Date of filing: **14.09.2023**

(51) International Patent Classification (IPC):
**B23K 11/16** (2006.01)     **B23K 11/11** (2006.01)

(52) Cooperative Patent Classification (CPC):
**B23K 11/11; B23K 11/16**

(86) International application number:
**PCT/JP2023/033593**

(87) International publication number:
**WO 2024/063012 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 JP 2022150138**

(71) Applicant: **JFE Steel Corporation
Tokyo 100-0011 (JP)**

(72) Inventors:
• **KANAZAWA, Tomomi
Tokyo 100-0011 (JP)**

• **SAWANISHI, Chikaumi
Tokyo 100-0011 (JP)**
• **TAKASHIMA, Katsutoshi
Tokyo 100-0011 (JP)**
• **YAMAMOTO, Shunsuke
Tokyo 100-0011 (JP)**
• **HOSHINO, Katsuya
Tokyo 100-0011 (JP)**
• **NISHIYAMA, Takeshi
Tokyo 100-0011 (JP)**
• **MATSUDA, Hiroshi
Tokyo 100-0011 (JP)**

(74) Representative: **Hoffmann Eitle
Patent- und Rechtsanwälte PartmbB
Arabellastraße 30
81925 München (DE)**

(54)     **WELDED MEMBER AND MANUFACTURING METHOD THEREFOR**

(57)     It is an object to provide a welded member and a method for producing the welded member. The invention relates to a welded member prepared by resistance-spot-welding a sheet set including two or more overlapping steel sheets. The total thickness $t_{all}$ of the sheet set and the minimum thickness $t_{weld}$ of the resistance spot weld satisfy formula (1). At least one of the two or more steel sheets is a Si-containing galvanized steel sheet containing 0.5 to 3.0% by mass of Si. In the Si-containing galvanized steel sheet, a specific region A is formed below the galvanized layer, and the thickness $d_a$ of the region A in the thickness direction satisfies formula (2).

$$0.5 < t_{weld} / t_{all} < 1.0 \qquad (1)$$

$$2 < d_a < 10 \qquad (2)$$

FIG. 3

**Description**

Technical Field

The present invention relates to a welded member produced by resistance-spot-welding steel sheets and more particularly to a welded member suitable for members of structural parts of automobiles etc. and a method for producing the welded member.

Background Art

In recent years, increasing environmental concerns have led to stringent $CO_2$ emission regulations. One challenge in the field of automobiles is to reduce the weight of vehicle bodies for the purpose of improving fuel economy. Therefore, automotive parts are being reduced in thickness by using high strength steel sheets, and steel sheets having a tensile strength (TS) of 980 MPa or more are being increasingly used. From the viewpoint of corrosion resistance, steel sheets with coatings such as zinc having a rustproofing function are used for portions to be exposed to rainwater.

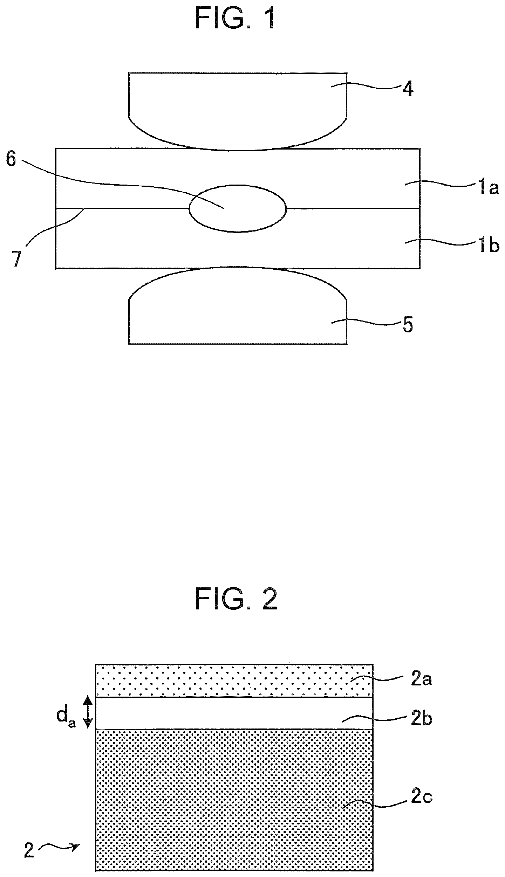

In automotive assembly, press-formed automotive parts are often combined together by resistance spot welding, from the viewpoint of cost and production efficiency. To join overlapping steel sheets together, a resistance spot welding method, which is one type of lap resistance welding, is generally used. In this welding method, two or more overlapping steel sheets are held between a vertical pair of welding electrodes, and a high welding current is applied between the upper and lower electrodes for a short time while the steel sheets are pressed between the upper and lower welding electrodes to thereby join the steel sheets together. Fig. 1 shows an example in which two overlapping steel sheets 1a and 1b held between welding electrodes 4 and 5 are resistance-spot-welded. In this method, resistance heat generated by the application of a high welding current is used to obtain a spot-shaped weld 6. The spot-shaped weld 6 is called a nugget. Specifically, when the current is applied to the overlapping steel sheets, the steel sheets 1a and 1b are melted at their contact portion and then solidified to form the nugget. The steel sheets are thereby jointed together at the spot. To ensure crash safety, it is necessary to improve the strength of the steel sheets and to improve the strength of the weld.

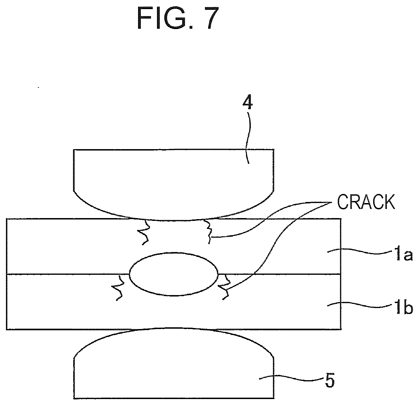

One problem with resistance spot welding of a sheet set including a plurality of overlapping steel sheets including a surface-treated steel sheet is that cracking can occur in the weld, as shown in Fig. 7. The surface-treated steel sheet is a steel sheet having a metal coated layer on the surface of a base metal (base steel sheet). Examples of the metal coating include: zinc coatings typified by electrogalvanized coatings and hot-dip galvanized coatings (including hot-dip galvannealed coatings); and zinc alloy coatings containing, in addition to zinc, another element such as aluminum or magnesium. The melting points of the zinc coatings and the zinc alloy coatings are lower than the melting point of the base metal of the surface-treated steel sheet, and therefore the following problem occurs.

It has been considered that the cracking in the weld is caused by so-called liquid metal embrittlement (hereinafter referred to as "LME cracking"). Specifically, the low-melting point metal coated layer on the surface of the steel sheet melts during welding. When the welding pressure from the electrodes or tensile stress due to thermal expansion and contraction of the steel sheets is applied to the weld, the molten low-melting point metal penetrates into grain boundaries of the base metal of the surface-treated steel sheet and causes a reduction in grain boundary strength, and the cracking thereby occurs. The LME cracking occurs at various positions such as the surfaces of the steel sheets 1a and 1b that are in contact with the welding electrodes 4 and 5 and the surfaces of the steel sheets 1a and 1b at which the steel sheets are in contact with each other, as shown in Fig. 7.

Examples of the measures against the LME cracking include techniques in Patent Literature 1 to Patent Literature 3. In Patent Literature 1, a steel sheet in a sheet set has a chemical composition in a specific range. Specifically, the steel sheet proposed has a chemical composition including, in % by weight, C: 0.003 to 0.01%, Mn: 0.05 to 0.5%, P: 0.02% or less, sol. Al: 0.1% or less, Ti: $48 \times (N / 14)$ to $48 \times \{(N / 14) + (S / 32)\}$%, Nb: $93 \times (C / 12)$ to 0.1%, B: 0.0005 to 0.003%, N: 0.01% or less, and Ni: 0.05% or less, with the balance being Fe and incidental impurities.

Patent Literature 2 proposes a spot welding method for high strength coated steel sheets. In this resistance spot welding method for high strength coated steel sheets, resistance spot welding is performed while the welding energization time and the holding time after welding energization are set such that the following conditional expressions (A) and (B) are satisfied.

$$0.25 \times (10 \times t + 2) / 50 \leq WT \leq 0.50 \times (10 \times t + 2) / \text{--> } 50 \text{ (A)} \tag{A}$$

$$300 - 500 \times t + 250 \times t^2 \leq HT \quad \text{(B)}$$

In the conditional expressions (A) and (B), t is the thickness (mm) of the sheets, WT is the welding energization time (ms), and HT is the holding time (ms) after welding energization.

Patent Literature 2 also proposes that the welding is performed using high tensile galvanized steel sheets with the amounts of alloying elements in the steel sheets set to be equal to or less than specific values while the energization time and the holding time of the electrodes after energization are set according to the thickness of the steel sheets.

Patent Literature 3 proposes a method that uses an energization pattern including multi-stage energization having three or more stages. Specifically, welding conditions such as energization time and welding current are controlled such that an appropriate current range (ΔI) is 1.0 kA or more and preferably 2.0 kA or more, and a cooling period is provided between the stages. The above appropriate current range is a current range in which a nugget having a diameter equal to or more than a desired nugget diameter and an unmelted thickness of 0.05 mm or more can be stably formed.

Citation List

Patent Literature

    PTL 1: Japanese Unexamined Patent Application Publication No. 10-195597
    PTL 2: Japanese Unexamined Patent Application Publication No. 2003-103377
    PTL 3: Japanese Unexamined Patent Application Publication No. 2003-236676

Summary of Invention

Technical Problem

However, one problem with Patent Literature 1 is that the need to limit the amounts of the alloying elements in the steel sheets limits the application of the steel sheets that meet the required performance. In particular, since the degree of alloying in recent steel sheets having increased strength is increasing, the applications of the steel sheets in Patent Literature 1 are extremely limited.

Patent Literature 2 proposes only the method for preventing cracking when the welding current is set to an excessively large value that causes splashes, and no reference is made to cracking in a state in which no splashes occur.

Problems with Patent Literature 3 are that many man-hours are required to obtain appropriate welding conditions and that the method cannot be applied to steel sheets and sheet sets in which the appropriate current range is not easily maintained. Moreover, in Patent Literature 2 and Patent Literature 3, the influence of the inclination angle of the electrodes is not studied, and therefore the measures against this influence are insufficient in some cases, in consideration of the actual operation performed during the assembly of automobiles.

By summarizing the common problem with Patent Literature 1 to Patent Literature 3 with consideration given to the joint strength, a technique for preventing the occurrence of LME cracking while the strength of the resistance spot weld in the high strength steel sheet is maintained has not been proposed.

The present invention has been made in view of the foregoing circumstances, and it is an object to provide a welded member having a resistance spot weld which can have high strength even in a high strength steel sheet and in which the occurrence of LME cracking is prevented and to provide a method for producing the welded member.

Solution to Problem

To achieve the above object, the inventors have conducted extensive studies.

The effects of the invention on cracking (i.e., LME cracking) that occurs during welding cannot be described simply because various influencing factors are involved in a complex manner. However, LME cracking tends to occur in a resistance spot weld when excessively large tensile residual stress is generated in the resistance spot weld due to work disturbances etc. during welding. In particular, it is known that, on a steel sheet faying surface side on which the steel sheets are in contact with each other, LME cracking is likely to occur in a region in which large local tensile stress is generated when the pair of welding electrodes are released after completion of energization and pressurization for resistance spot welding.

With regard to the influence of components of a steel sheet, it is known that, as the amount of Si increases, the LME cracking resistance of the steel sheet deteriorates, as described in reference 1. Therefore, by disposing a solute Si-depleted layer containing a reduced amount of solute Si in the vicinity of the surface of a base metal on the side toward a steel sheet faying surface at which the steel sheets are in contact with each other, a layer containing a certain amount or more of Si is prevented from coming into contact with zinc etc. in a metal coated layer, and this may be effective in preventing LME cracking.

# EP 4 563 275 A1

[Reference 1] WO2021-200412

However, when the thickness of the solute Si-depleted layer is significantly large in the vicinity of the surface of the weld heat affected zone, in particular in the vicinity of the surface of the base metal on the steel surface faying surface side, it is feared that the strength of the resistance spot weld may decrease. Specifically, the inventors have arrived at the idea that, by controlling the thickness of the solute Si-depleted layer in the vicinity of the surface of the base metal in the weld heat affected zone within a certain range, the strength of the resistance spot weld can be ensured and also the occurrence of LME cracking can be prevented.

The present invention is based on the above findings and summarized as follows.

[1] A welded member having a resistance spot weld formed by resistance-spot-welding a sheet set including two or more overlapping steel sheets,

wherein a total thickness of the sheet set is denoted as $t_{all}$ (mm), wherein a minimum thickness of the resistance spot weld is denoted as $t_{weld}$ (mm), wherein $t_{all}$ and $t_{weld}$ satisfy formula (1),
wherein at least one of the two or more steel sheets is a Si-containing galvanized steel sheet containing 0.5 to 3.0% by mass of Si,
wherein, in the Si-containing galvanized steel sheet, a region in which a Zn concentration is 5.0% by mass or less and a Si concentration is less than 0.5% by mass is defined as a region A, and a thickness of the region A in a thickness direction within a base metal zone is denoted as $d_a$ ($\mu$m), wherein the region A is formed below a galvanized layer, and wherein $d_a$ satisfies formula (2):

$$0.5 < t_{weld} / t_{all} < 1.0, \qquad (1)$$

$$2 < d_a < 10. \qquad (2)$$

[2] The welded member according to [1], wherein, in the resistance spot weld in the Si-containing galvanized steel sheet, the thickness of the region A in the thickness direction at a position located in a corona bond and spaced 200 $\mu$m from an edge of a nugget in a direction toward the base metal zone is denoted as $d_{wa}$ ($\mu$m), and $d_{wa}$ satisfies formula (3):

$$0 < d_{wa} < 8. \qquad (3)$$

[3] The welded member according to [1] or [2], wherein the Si-containing galvanized steel sheet includes an Fe-based coated layer within the region A.
[4] The welded member according to any one of [1] to [3], wherein a tensile strength of the steel sheet is denoted as TS (MPa), and
wherein, in the Si-containing galvanized steel sheet, TS ≥ 980.
[5] The welded member according to any one of [1] to [4], wherein an average of a shortest distance from a center of a welding point of the resistance spot weld to an end face of the steel sheets is 3 mm or more, and
wherein, when the welded member has a plurality of the welding points, an average of center-to-center distances between adjacent ones of the welding points is 6 mm or more.
[6] A method for producing the welded member according to any one of [1] to [5], the method including:

a preparation step of disposing the two or more steel sheets so as to overlap each other to form the sheet set; and a welding step of resistance-spot-welding the sheet set,
wherein, in the welding step,
the sheet set is held between a pair of welding electrodes to perform energization for joining under application of pressure, and
one or two or more of states (a) to (e) are satisfied at at least one welding point immediately before the application of the pressure by the welding electrodes,
wherein the welding step includes
an energization step of performing the energization at a welding pressure of 2.0 to 10.0 kN and a welding current of 4.0 to 15.0 kA for an energization time of 0.1 to 2.0 S and
an electrode holding step in which, when a welding pressure holding time after completion of the energization is denoted as Th (S), Th satisfies the relation of formulas (5) and (6):

(a) a state in which an inclination angle between the welding electrodes and the overlapping steel sheets is 0.2 degrees or more;

(b) a state in which an amount of offset between the pair of welding electrodes is 0.1 mm or more;

(c) a state in which a gap of 0.5 mm or more is present between one of the welding electrodes and the overlapping steel sheets;

(d) a state in which a gap of 0.5 mm or more is present between at least one pair of steel sheets among the overlapping steel sheets; and

(e) a state in which a shortest distance from a center of the at least one welding point to a steel sheet end face of the overlapping steel sheets is 10 mm or less:

$$(1 / d_a + t + TS / 1000) / 110 < Th < \{-(1 / d_a + 1 / t \text{ --> } + TS / 1000) / 65\} + 1, (5) \tag{5}$$

$$0 < Th, \tag{6}$$

where, in formula (5), $d_a$ is the thickness ($\mu$m) of the region A in the thickness direction within the base metal zone, t is a thickness (mm) of the Si-containing galvanized steel sheet, and TS is a tensile strength (MPa) of the Si-containing galvanized steel sheet.

Advantageous Effects of Invention

In the present invention, even with resistance spot welding using a high strength steel sheet, a welded member and a method for producing the welded member can be provided in which a reduction in strength of the resistance spot weld caused by softening of the base metal in the vicinity of its surface due to the thickness of the solute Si-depleted layer can be prevented and no LME cracking occurs.

Brief Description of Drawings

[Fig. 1] Fig. 1 is a cross-sectional view schematically showing an example of resistance spot welding in the invention.

[Fig. 2] Fig. 2 is a cross-sectional view in the thickness direction illustrating an example of a Si-containing galvanized steel sheet used in the invention.

[Fig. 3] Fig. 3 shows cross-sectional views schematically illustrating a resistance spot weld and the periphery thereof in a welded member according to an embodiment of the invention.

[Fig. 4] Fig. 4 is a top view illustrating the shortest distance from the center of a welding point to an edge of steel sheets in the welded member of the invention.

[Fig. 5] Fig. 5 is a top view illustrating the center-to-center distance between welding points in the welded member of the invention.

[Fig. 6] Fig. 6 is a cross-sectional view illustrating an example of a tensile test in Examples of the invention when a sheet set including three sheets is used.

[Fig. 7] Fig. 7 is a cross-sectional view schematically showing an example of the occurrence of cracking during conventional resistance spot welding.

Description of Embodiments

Embodiments of the welded member of the invention and the method for producing the welded member will be described. However, the invention is not limited to these embodiments.

Referring first to Figs. 1 to 3, the welded member of the invention will be described.

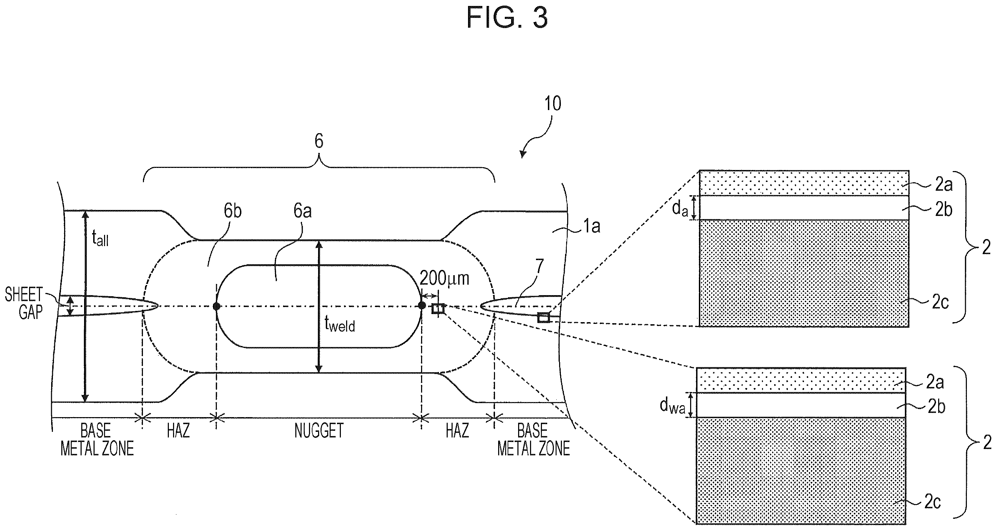

Fig. 1 shows an example in which two steel sheets are resistance-spot-welded together. Fig. 2 is a cross-sectional view in the thickness direction illustrating an example of a Si-containing galvanized steel sheet used in the invention. Fig. 3 shows a cross-sectional view in the thickness direction illustrating an example of the welded member of the invention and partial enlarged cross-sectional views of the resistance spot weld of the welded member. Portions shown in these enlarged cross-sectional views are regions surrounded by rectangular frames in Fig. 3.

The present invention is a welded member having a resistance spot weld (which hereinafter may be referred to as a "weld") formed by resistance-spot-welding a sheet set including two or more overlapping steel sheets.

As described later, at least one of the two or more overlapping steel sheets is a Si-containing galvanized steel sheet containing 0.5 to 3.0% by mass of Si (see Fig. 2). As shown in Fig. 2, the Si-containing galvanized steel sheet 2 in the invention is a galvanized steel sheet in which a Si-containing steel sheet 2c having a region A is used as a base metal. The Si-containing galvanized steel sheet 2 includes a galvanized layer 2a formed on at least one side (at least one surface of the base metal) and a region A2b formed below the galvanized layer 2a. Specifically, the region A2b is formed in a surface layer of the Si-containing steel sheet (base metal) 2c. The details of the Si-containing galvanized steel sheet will be described later and are omitted here.

No particular limitation is imposed on the number of steel sheets used in the invention so long as the number is two or more. The number of steel sheets is preferably 3 or more. No particular limitation is imposed on the upper limit of the number of steel sheets, but the number is preferably 5 or less.

The example shown in Fig. 3 is a welded member 10 including two overlapping steel sheets resistance-spot-welded together. The steel sheet (lower sheet) 2 disposed on the lower side is a Si-containing galvanized steel sheet, and the steel sheet (upper sheet) 1a disposed on the upper side is, for example, a cold-rolled steel sheet. A weld 6 described below is formed at a steel sheet faying surface 7 at which the steel sheets 1a and 2 are in contact with each other.

In the welded member in the example shown in Fig. 3, the weld 6 in the invention in which the thickness of a solute Si-depleted layer in the weld heat affected zone is controlled within a certain range is formed only on the lower sheet 2 side. When the upper and lower sheets are each the Si-containing galvanized steel sheet in the invention, the weld 6 in the invention is formed on both the upper and lower steel sheet sides of the steel sheet faying surface 7.

Although not illustrated, when three or more overlapping steel sheets are welded together, all or at least one of the lowermost steel sheet (the lower sheet), the uppermost steel sheet (the upper sheet), and a steel sheet (a middle sheet) disposed therebetween is a Si-containing galvanized steel sheet. The weld in the invention is formed so as to include the steel sheet faying surfaces between the sheets. For example, in a sheet set including three steel sheets, the weld in the invention is formed so as to include two steel sheet faying surfaces at which the lower and middle sheets and the middle and upper sheets are in contact with each other. When the three steel sheets used are each the Si-containing galvanized steel sheet, the thicknesses of the solute Si-depleted layers in the steel sheet surface layers on the upper and lower sides of each steel sheet faying surface are controlled.

<Weld>

The weld in the invention will be described in detail. The weld formed in a steel set including two overlapping steel sheets is similar to the weld formed in a steel set including three or more overlapping steel sheets, and therefore Fig. 3 will be used for the following description.

As shown in Fig. 3, in the weld 6 in the invention, the total thickness of the sheet set is denoted as $t_{all}$ (mm), and the minimum thickness of the weld is denoted as $t_{weld}$ (mm). Then the total thickness ($t_{all}$) and the minimum thickness ($t_{weld}$) of the weld satisfy formula (1) shown below.

As shown in Fig. 3, in the Si-containing galvanized steel sheet 2, a region in which the Zn concentration is 5.0% by mass or less and the Si concentration is less than 0.5% by mass is defined as a region A, and the thickness of the region A in the thickness direction within the base metal zone is denoted as $d_a$ ($\mu$m). The region A is formed below the galvanized layer 2a. In addition to the above condition, the thickness ($d_a$) of the region A in the base metal zone satisfies the following formula (2).

$$0.5 < t_{weld} / t_{all} < 1.0 \qquad (1)$$

$$2 < d_a < 10 \qquad (2)$$

When the ratio ($t_{weld}/t_{all}$) of the minimum thickness to the total thickness does not satisfy formula (1) above, in particular, the ratio is less than or equal to the lower limit of formula (1), the reduction in the thickness of the weld is significantly large. Therefore, the tensile residual stress generated in the weld is excessively large, and LME cracking tends to occur. Moreover, this causes a reduction in the joint strength. The thickness of the sheet set is reduced by the pressurization by the pair of welding electrodes and the influence of heat during welding. Therefore, the upper limit of $t_{weld}/t_{all}$ is less than 1.0.

The lower limit of formula (1) is preferably 0.55 or more, and the upper limit of formula (1) is preferably 0.95 or less.

The "minimum thickness ($t_{weld}$) of the weld" is the minimum thickness (mm) in the thickness direction in a region extending in the width direction within a nugget 6a, as shown in Fig. 3. The minimum thickness ($t_{weld}$) can be measured by a method described later in Examples.

As shown in Fig. 2 etc., the region A2b is formed below the galvanized layer 2a and located in a surface layer of the Si-containing steel sheet 2c. In the weld, Zn diffuses to the inside of the contacting steel sheet due to heat during welding. However, when the region A with a reduced Zn concentration and a reduced Si concentration is formed in the surface layer of the Si-containing steel sheet having the galvanized layer, the region A functions as a barrier layer that prevents Zn from entering the Si-containing steel sheet. The region A functions also as a solute Si-depleted layer. These functions can prevent the occurrence of LME cracking in the weld. The "solute Si-depleted layer" means a layer in which the amount of solute Si in the steel is smaller than that in the base metal, i.e., Si is depleted.

If the thickness ($d_a$) of the region A in the base metal zone is insufficient, it is difficult to form the solute Si-depleted layer in the weld heat affected zone described later. Therefore, $d_a$ is more than 2 $\mu$m.

Examples of the method for forming the region A in the surface layer of the Si-containing steel sheet having the galvanized layer include Fe-based electroplating described later. However, it is necessary to use a method that can reduce the concentrations of alloying elements other than Si in the surface layer of the Si-containing steel sheet. Therefore, if the thickness of the region A is excessively large, it is feared that the steel sheet surface layer in the weld heat affected zone may be significantly softened. In particular, since excessive softening at the steel sheet faying surface between the steel sheets causes a reduction in the strength of the weld, $d_a$ is less than 10 $\mu$m.

The lower limit of formula (2) is preferably 3 $\mu$m or more and more preferably 3.0 $\mu$m or more. The upper limit of formula (2) is preferably 8 $\mu$m or less, more preferably 8.0 $\mu$m or less, and still more preferably 6.0 $\mu$m or less.

In the present invention, it is preferable to have the following condition in addition to the conditional expressions described above.

[Thickness of region A in thickness direction within corona bond zone] (preferred condition)

Specifically, as shown in Fig. 3, the Si-containing galvanized steel sheet 2 has the region A in the steel sheet surface layer on the steel sheet faying surface 7 side of the overlapping steel sheets. In the weld in the Si-containing galvanized steel sheet, the thickness of the region A in the thickness direction at a position located in a corona bond and spaced 200 $\mu$m from the edge of the nugget in the direction toward the base metal zone is denoted as $d_{wa}$. Then it is effective that the thickness ($d_{wa}$ ($\mu$m)) satisfies the following formula (3).

$$0 < d_{wa} < 8 \qquad (3)$$

When the thickness ($d_{wa}$) of the region A in the thickness direction within the corona bond zone satisfies formula (3), the region containing more than 5% by mass of Zn and the region containing 0.5% by mass or more of Si are not in contact with each other even in the weld heat affected zone in which LME cracking can occur, and therefore LME cracking is unlikely to occur.

If the lower limit of formula (3) is not satisfied (i.e., $d_{wa}$ is 0 $\mu$m), the region with a high Zn concentration and the region with a high Si concentration are in contact with each other, and the occurrence of LME cracking is facilitated. Therefore, a $d_{wa}$ of more than 0 $\mu$m is effective in preventing LME cracking. The thickness ($d_{wa}$) is more preferably more than 1 $\mu$m and still more preferably more than 2 $\mu$m. In this case, the above operational effects can be obtained more effectively.

As described above, if the thickness ($d_{wa}$) of the region A in the corona bond zone is excessively large, it is feared that the steel sheet surface layer in the weld heat affected zone may be significantly softened and the joint strength may be low. Therefore, the thickness ($d_{wa}$) is preferably less than 8 $\mu$m.

<Si-containing galvanized steel sheet>

In the present invention, two or more steel sheets including at least one Si-containing coated steel sheet are disposed so as to overlap each other to form a sheet set, as described above. Referring to Fig. 2, the Si-containing galvanized steel sheet in the invention will be described.

As shown in Fig. 2, the Si-containing galvanized steel sheet is a galvanized steel sheet in which the Si-containing steel sheet 2c having the region A2b in its surface layer serves as a base metal. The region A is a region in which the Zn concentration is 5.0% by mass or less and the Si concentration is less than 0.5% by mass. The Si-containing galvanized steel sheet 2 can be produced, for example, by the following method.

First, a cold-rolled steel sheet containing Si in an amount of 0.5% by mass or more and 3.0% by mass or less is produced. For example, the cold-rolled steel sheet is produced by subjecting a steel slab having the chemical composition described above to hot rolling to produce a hot-rolled sheet, subjecting the hot-rolled sheet to pickling, and then subjecting the resulting hot-rolled sheet to cold rolling to prepare the cold-rolled steel sheet.

Next, the cold-rolled steel sheet is subjected to an annealing process in a reducing atmosphere and then subjected to galvanization, and the Si-containing steel sheet having the galvanized layer (the Si-containing galvanized steel sheet) can thereby be obtained.

[Region A]

The Si-containing galvanized steel sheet in the invention may have an Fe-based coated layer as the region A.

Alternatively, the Si-containing galvanized steel sheet may have a Si internally oxidized layer as the region A. No particular limitation is imposed on the method for forming the region A in the Si-containing galvanized steel sheet.

[Fe-based precoated layer]

In one method, an Fe-based precoated layer, for example, is formed as the Fe-based coated layer.

Specifically, it is preferable that the Si-containing galvanized steel sheet includes an Fe-based coated layer with a coating weight per side of more than $20.0 \text{ g/m}^2$ below the galvanized layer. In other words, the Fe-based coated layer is included below the galvanized layer and located in the surface layer within the region A.

Preferably, the precoated layer is an Fe-based electroplated layer. Examples of the Fe-based electroplated layer that can be used include, in addition to pure iron, alloy coated layers such as an Fe-B alloy, an Fe-C alloy, an Fe-P alloy, an Fe-N alloy, an Fe-O alloy, an Fe-Ni alloy, an Fe-Mn alloy, an Fe-Mo alloy, and an Fe-W alloy. No particular limitation is imposed on the chemical composition of the Fe-based electroplated layer. However, in the present invention, it is preferable that the chemical composition contains one or two or more elements selected from the group consisting of B, C, P, N, O, Ni, Mn, Mo, Zn, W, Pb, Sn, Cr, V, and Co in a total amount of 10% by mass or less with the balance being Fe and incidental impurities. By setting the total amount of elements other than Fe to 10% by mass or less, a reduction in electrolysis efficiency is prevented, and the Fe-based electroplated layer can be formed at low cost.

The coating weight per side of the Fe-based electroplated layer is preferably $20.0 \text{ g/m}^2$ or more. The coating weight is more preferably $25.0 \text{ g/m}^2$ or more, still more preferably $30.0 \text{ g/m}^2$ or more, and yet more preferably $35.0 \text{ g/m}^2$ or more. No particular limitation is imposed on the upper limit of the coating weight per side of the Fe-based electroplated layer. From the viewpoint of preventing the region A formed from being excessively large and from the viewpoint of cost, the coating weight per side of the Fe-based electroplated layer is preferably $60 \text{ g/m}^2$ or less.

The thickness of the Fe-based electroplated layer is measured as follows. After the hot-dip galvanization, a $10 \times 15$ mm sample is cut from the high-strength hot-dip galvannealed steel sheet and embedded in a resin to prepare a cross-section-embedded sample. The cross section of the sample is observed at three randomly selected points using a scanning electron microscope (SEM) at an acceleration voltage of 15 kV at a magnification of 2000X to 10000X depending on the thickness of the Fe-based electroplated layer. The average value of the thicknesses in the three viewing fields is determined and multiplied by the specific gravity of iron to convert the thickness to the coating weight per side of the Fe-based electroplated layer.

It is preferable that the surface of an unannealed high strength cold rolled steel sheet is subjected to Fe-based electroplating treatment to obtain an unannealed Fe-based electroplated steel sheet. No particular limitation is imposed on the Fe-based electroplating treatment method. For example, the Fe-based electroplating bath used may be a sulfuric acid bath, a hydrochloric acid bath, or a mixture thereof. The unannealed high strength cold rolled steel sheet subjected to cold rolling may be subjected to the Fe-based electroplating treatment without oxidation treatment in, for example, a preheating furnace.

The content of Fe ions in the Fe-based electroplating bath before the start of energization is preferably 1.0 mol/L or more in terms of $Fe^{2+}$. When the content of Fe ions in the Fe-based electroplating bath is 1.0 mol/L or more in terms of $Fe^{2+}$, the coating weight of Fe is sufficient.

By using the steel sheet described above, the effects of the invention can be obtained more effectively. In particular, when a hot-dip galvannealed steel sheet subjected to pre-plating before the formation of the galvanized layer and then subjected to galvannealing treatment after the hot-dip galvanization is used, the effects of the invention are still more effective.

[Internally oxidized layer]

Examples of the method for forming the region A other than the precoated layer in the steel sheet surface layer include a method in which a Si internally oxidized layer is formed in the steel sheet surface layer. For example, in the process of producing the Si-containing steel sheet, the dew point during annealing is increased to form the Si internally oxidized layer in the steel sheet surface layer.

Specifically, the "Si internally oxidized layer" is a region in which the Si oxide is formed in crystal grains and/or part of crystal grain boundaries.

When the Si-containing galvanized steel sheet has the Si internally oxidized layer as the region A, it is preferable that the lower limit of the thickness of the Si internally oxidized layer in the thickness direction is $2.0 \ \mu m$ or more. Since the amount of solute Si in the steel in the Si internally oxidized layer is less than 0.5% by mass, the thickness of the region A can be $2.0 \ \mu m$ or more. To adjust the thickness of the Si internally oxidized layer to $6.0 \ \mu m$ or more, it is necessary to increase the dew point during annealing excessively, and it is feared that corrosion etc. may occur in the annealing furnace. Therefore, the upper limit of the thickness in the thickness direction is less than $6.0 \ \mu m$.

The thickness of the Si internally oxidized layer is measured as follows. First, after the hot-dip galvanization, a 10 × 15 mm sample is cut from the high-strength hot-dip galvannealed steel sheet and embedded in a resin to prepare a cross-section-embedded sample. The cross section of the sample is observed at three randomly selected points using a scanning electron microscope (SEM) at an acceleration voltage of 10 kV at a magnification of 3000X. The thickness of the Si internally oxidized layer in the thickness direction in each of the photographs at the three observation points was measured, and the average of the three measurements is used as the thickness of the Si internally oxidized layer in the thickness direction.

[Galvanized layer]

In the present invention, from the viewpoint of manufacturability, it is preferable that the Si-containing galvanized steel sheet is a hot-dip galvanized steel sheet (GI steel sheet) having a hot-dip galvanized layer. In particular, with consideration also given to the pressability and continuous spot-weldability of the steel sheets, the Si-containing galvanized steel sheet is preferably a hot-dip galvannealed steel sheet (GA steel sheet) having a hot-dip galvannealed layer.

[Tensile strength]

As described above, as the strength of the steel sheet increases and the amounts of alloying elements increase, the likelihood of the occurrence of LME cracking generally increases. Therefore, in the present invention, the tensile strength of a steel sheet is denoted as TS (MPa). Then, in the Si-containing galvanized steel sheet, it is preferable that $TS \geq 980$. This is because, when the high strength steel sheet satisfies this relation, the effects of the invention can be obtained more effectively.

<Welding points in welded member>

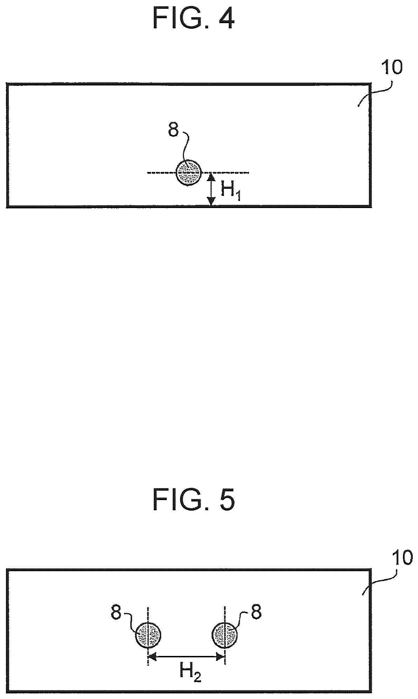

Welding points in the welded member in the invention will be described using Figs. 4 and 5.
Figs. 4 and 5 are top views showing the vicinities of the welds of the welded members (illustrations of the welded members as viewed from above).
As shown in Figs. 4 and 5, in the welded member 10 in the invention, the average of the shortest distances $(H_1)$ from the centers of welding points of welds to an end face of the steel sheets is 3 mm or more. When a plurality of welding points is present, the average $(H_2)$ of the center-to-center distances between adjacent welding points is preferably 6 mm or more.
In the welded member of the invention, the number of welding points may be only one. In this case, it is only necessary that, among the above welding point conditions, the condition that the "average of the shortest distance $(H_1)$ from the center of the welding point of the weld to the end face of the steel sheets is 3 mm or more" be satisfied.
The "average of the shortest distances $(H_1)$ from the centers of the welding points of the welds to the end face of the steel sheets" is determined by specifying an end face of the steel sheets closest to the centers of the welding points 8 and measuring the distances from the welding points to the end face, as shown in Fig. 4. When the number of welding points in the welded member is five or more, the average for five appropriately selected welding points is used as the "average shortest distance." When the number of welding points in the welded member is less than 5, the average for all the welding points is used as the "average shortest distance."
If the average shortest distance $(H_1)$ is less than 3 mm, the sheets around the nuggets are insufficiently pressed on the steel sheet end face side, so that the molten metal easily splashes from the gap between the sheets toward the steel sheet end face. Therefore, splashes occur significantly during welding, and variations in nugget diameters are likely to increase, so that the strength of the welds becomes unstable. No limitation is imposed on the upper limit of the average shortest distance. To allow a welding gun having a general shape to be used for welding, the average shortest distance $(H_1)$ is preferably 1000 mm or less. The average shortest distance $(H_1)$ is more preferably 30.0 mm or less and still more preferably 20.0 mm or less.
As shown in Fig. 5, the "average $(H_2)$ of the center-to-center distances between adjacent welding points" is determined by measuring the center-to-center distances between adjacent welding points 8. If the average $(H_2)$ of the center-to-center distances between welding points is less than 6 mm, a diverted flow to an existing welding point occurs during welding, and the current density in the weld decreases. In this case, the nugget diameter tends to be small, and the strength of the weld tends to decrease. Moreover, the weld is restrained by the existing welding point, and the tensile residual stress increases, so that LME cracking tends to occur. No limitation is imposed on the upper limit of the average of the center-to-center distances between welding points. From the viewpoint of ensuring the strength and stiffness of the welded member, the average $(H_2)$ of the center-to-center distances between welding points is preferably 100 mm or less. The average $(H_2)$ of the center-to-center distances between welding points is more preferably 60.0 mm or less and still more preferably 40.0 mm or less.

Next, an embodiment of a method for producing the welded member of the invention will be described.

The welded member of the invention is produced through a production process including a preparation step of disposing two or more steel sheets so as to overlap each other to prepare a sheet set and a welding step of resistance-spot-welding the sheet set.

<Preparation step>

In this step, two or more steel sheets are disposed so as to overlap each other to prepare a sheet set. At least one of the two or more steel sheets is the Si-containing galvanized steel sheet having the region A. For example, as shown in Fig. 1, the two overlapping steel sheets 1a and 1b are stacked to prepare a sheet set. The description of the steel sheets used for the steel set has already been provided and will be omitted. Next, the welding step is performed.

<Welding step>

The welding step includes an energization step and an electrode holding step described later. In the welding step, the sheet set prepared in the preparation step is joined together. In this step, as shown, for example, in Fig. 1, the sheet set is held between a pair of welding electrodes 4 and 5 disposed on the upper and lower sides of the sheet set and then energized under the application of pressure using the pair of welding electrodes 4 and 5 while the welding conditions are controlled to prescribed conditions. In this manner, the weld 6 in the invention described above is formed between the steel sheets 1a and 1b at the steel sheet faying surface 7 of the steel sheets, and the steel sheets can thereby be joined together (see Fig. 3).

When the Si-containing galvanized steel sheet having the region A and a steel sheet having no region A are used to prepare a sheet set, they are disposed such that the side with the region A (the side with the galvanized layer) is located at the steel sheet faying surface. There is, naturally, no problem if the region A and the galvanized layer are present also at the steel sheet surface of the Si-containing galvanized steel sheet in contact with a welding electrode.

A welder usable for the resistance spot welding method in the present invention may be a welder that includes a pair of upper and lower welding electrodes and can perform welding while the welding pressure and the welding current are controlled freely. No particular limitation is imposed on the pressurizing mechanism (such as an air cylinder or a servo motor) of the welder, its type (e.g., a stationary or robot gun type), and the shape of the electrodes. Examples of the type of welding electrode tip include a DR type (dome radius type), an R type (radius type), and a D type (dome type) specified in JIS C 9304: 1999. The tip diameter of the welding electrodes is, for example, 4 mm to 16 mm.

Next, the welding conditions for the welding step in the invention will be described.

The welding step includes the energization step and the electrode holding step. In the welding step, the sheet set is held between the pair of welding electrodes to perform energization for joining under the application of pressure. In this case, one or two or more of states (a) to (e) described below are satisfied at at least one welding point immediately before the application of pressure by the welding electrodes. In the energization step, the energization is performed under the welding conditions of a welding pressure of 2.0 to 10.0 kN and a welding current of 4.0 to 15.0 kA for an energization time of 0.1 to 2.0 S. In the electrode holding step, the welding pressure holding time after completion of the energization is denoted as Th (S), and Th satisfies the relations of formulas (5) and (6).

[Energization step]

[Welding pressure, welding current, and energization time]

If the welding pressure in the energization step is less than 2.0 kN, the pressurization of the steel sheets is insufficient. In this case, splashes are likely to occur, and LME cracking tends to occur. If the welding pressure exceeds 10.0 kN, a special welding gun designed for applying high pressure is needed, and many restrictions are placed on the facility. Moreover, the reduction in thickness of the weld is significant. Therefore, LME cracking may occur, and a reduction in joint strength may occur. The welding pressure is preferably 3.0 kN or more and is preferably 7.0 kN or less.

If the welding current in the energization step is less than 4.0 kA, the heat input is insufficient, and a sufficient nugget diameter cannot be obtained. If the welding current exceeds 15.0 kA, the heat input is excessively large, and splashes are likely to occur, so that LME cracking tends to occur. The welding current is preferably 5.0 kA or more and is preferably 12.0 kA or less.

If the energization time in the energization step is shorter than 0.1 S, the diffusion of alloying elements in the weld heat affected zone may be insufficient, and the hardness of the softened layer in the weld heat affected zone may be almost unchanged relative to the hardness of the base metal. In this case, the steel sheet surface layer in the heat affected zone is softened significantly, and this results in a reduction in TSS. If the energization time exceeds 2.0 S, the takt time in an automobile assembly process is long, and the productivity is low. The energization time is preferably 0.12 S or longer and is preferably 1.5 S or shorter.

The resistance spot welding may be performed using multiple welding pressures, multiple current values, or in a specific pattern using a combination of energization and non-energization. For example, when multiple welding pressures are used for the energization, the minimum welding pressure during the energization is set to 2.0 kN or more, and the maximum welding pressure is set to 10.0 kN or less. When multiple current values are used for the energization, the minimum current value during the energization except for a non-energization period is set to 4.0 kA or more, and the maximum current value is set to 15.0 kA or less. The total energization time except for the non-energization period is set to 0.1 S or longer and 2.0 S or shorter.

[Welding work disturbances]

In the present invention, when, in addition to the above conditions, one or two or more of the following states (a) to (e) are satisfied at at least one welding point immediately before the application of pressure by the welding electrodes during the production of the welded member, the effects of the invention can be obtained more effectively.

(a) A state in which the inclination angle between the welding electrodes and the overlapping steel sheets is 0.2 degrees or more.
(b) A state in which the amount of offset between the pair of welding electrodes is 0.1 mm or more.
(c) A state in which a gap of 0.5 mm or more is present between one of the welding electrodes and the overlapping steel sheets.
(d) A state in which a gap of 0.5 mm or more is present between at least one pair of steel sheets among the overlapping steel sheets.
(e) A state in which the shortest distance from the center of the welding point to a steel sheet end face of the overlapping steel sheets is 10 mm or less.

These welding work disturbances each cause the temperature of the weld and/or the tensile stress when the electrodes are released to increase locally. In the resulting state, LME cracking is more likely to occur. However, in the present invention, the surface layer of the weld is controlled. Therefore, even in the presence of these welding work disturbances, LME cracking can be prevented, and tolerances for work disturbance management during the production of the member are improved. The details of the work disturbances will next be described.
(a) The state in which the inclination angle between the welding electrodes and the overlapping steel sheets is 0.2 degrees or more.

The inclination angle means the angle of inclination of the electrodes with respect to the steel sheets, i.e., the "angle between the direction of the welding pressure from the electrodes and the thickness direction of the steel sheets." When the inclination angle is large, bending stress is applied to the weld, and large compressive plastic deformation occurs locally. In this case, the tensile stress after the electrodes are released is large. The effects of the invention can be obtained effectively when the inclination angle is 0.2 degrees or more. If the inclination angle is excessively large, the formation of the nugget is unstable, and this causes splashes to occur. Therefore, the inclination angle is preferably 10 degrees or less. The inclination angle is more preferably 1 degree or more and is more preferably 8 degrees or less.
(b) The state in which the amount of offset between the pair of welding electrodes is 0.1 mm or more.
The offset means the state in which the center axes of the pair of welding electrodes are not aligned with each other. If the offset amount is large, bending stress is applied to the weld, and LME cracking is more likely to occur, as in the case of the inclination angle described above. The effects of the invention can be obtained effectively when the offset amount is 0.1 mm or more. If the offset amount is excessively large, the formation of the nugget is unstable, and this causes splashes to occur. Therefore, the offset amount is preferably 5 mm or less. The offset amount is more preferably 0.2 mm or more and is more preferably 3 mm or less.
(c) The state in which a gap of 0.5 mm or more is present between one of the welding electrodes and the overlapping steel sheets.
When a gap is present between one of the electrodes and the steel sheets immediately before the start of the application of pressure, e.g., when one of the electrodes is movable (hereinafter referred to as a movable electrode) and the other electrode is fixed (hereinafter referred to as a fixed electrode) with a gap present between the fixed electrode and the steel sheets, the movable electrode is used to start the application of pressure. In this case, the steel sheets are bent, and therefore bending stress is applied to the weld, so that LME cracking tends to occur. The effects of the invention can be obtained effectively when the gap width is 0.5 mm or more. If the gap width is excessively large, the formation of the nugget is unstable, and this causes splashes to occur. Therefore, the gap width is preferably 5 mm or less. The gap width is more preferably 1 mm or more and is more preferably 3 mm or less.

(d) The state in which a gap of 0.5 mm or more is present between at least one pair of steel sheets among the overlapping steel sheets.

When a gap is present between steel sheets immediately before the application of the pressure, bending deformation occurs in the steel sheets, and bending stress is applied to the weld, so that LME cracking tends to occur, as in the case of (c) described above. The effects of the invention can be obtained effectively when the gap width is 0.5 mm or more. If the gap width is excessively large, the formation of the nugget is unstable, and this causes splashes to occur. Therefore, the gap width is preferably 4 mm or less. The gap width is more preferably 1 mm or more and is more preferably 3 mm or less. The phrase "a gap is present between at least one pair of steel sheets" means as follows. In two or more overlapping steel sheets, two steel sheets disposed in the vertical direction are defined as a pair of steel sheets. The above phrase means that a gap is present between at least one pair of steel sheets.

(e) The state in which the shortest distance from the center of the welding point to the steel sheet end face of the overlapping steel sheets is 10 mm or less.

If the shortest distance from the center of the welding point to the steel sheet end face is small, the cooling rate of the weld decreases because heat conduction from the weld is inhibited at the steel sheet end face. In this case, the temperature when the electrodes are released is high, and LME cracking tends to occur. The effects of the invention can be obtained effectively when the shortest distance from the center of the welding point to the steel sheet end face is 10 mm or less. As described above, if the shortest distance is less than 3 mm, the occurrence of splashes during welding is significant. In this case, variations in nugget diameter tend to be large, and the strength of the welds is unstable. Therefore, the shortest distance is preferably 3 mm or more. The shortest distance is preferably 4 mm or more and is more preferably 8 mm or less.

[Electrode holding step]

After the energization step described above, the electrode holding step is performed. The electrode holding step is the step of holding the welding electrodes at a certain welding pressure after completion of the energization to prevent the occurrence of blowholes.

In the electrode holding step, the welding pressure holding time after completion of the energization is denoted as Th (S). Then, from the viewpoint of controlling the temperature after the electrodes are released, the welding pressure holding time (Th) satisfies the relations of formulas (5) and (6) below. In this case, the effects of the invention can be obtained effectively.

$$(1 / d_a + t + TS / 1000) / 110 < Th < \{-(1 / d_a + 1 / t + TS / 1000) / 65\} + 1 \ (5) \tag{5}$$

$$0 < Th \tag{6}$$

In formula (5), $d_a$ is the thickness ($\mu$m) of the region A in the thickness direction within the base metal zone, and t is the thickness (mm) of the Si-containing galvanized steel sheet. TS is the tensile strength (MPa) of the Si-containing galvanized steel sheet.

If the welding pressure holding time (Th) is excessively short, the temperature after the electrodes are released increases, and LME cracking tends to occur. If the welding pressure holding time (Th) is excessively long, the takt time per welding point is long, and the productivity decreases. Moreover, since the cooling rate of the weld increases, the microstructure of the weld is embrittled. In this case, the joint strength decreases, and the weld tends to undergo delayed fracture.

The smaller the thickness ($d_a$) of the region A in the thickness direction within the base metal zone, the weaker the function of the barrier layer that prevents intrusion of liquid Zr, and the smaller the effect of preventing LME cracking. It is therefore necessary to increase the lower limit of the welding pressure holding time (Th). As the thickness of the Si-containing galvanized steel sheet increases, the cooling rate of the weld decreases, and it is therefore necessary to increase the lower limit of Th. As the tensile strength (TS) of the Si-containing galvanized steel sheet increases, the microstructure of the weld is more likely to be embrittled, and LME cracking is more likely to occur. It is therefore necessary to increase the lower limit of Th. $d_a$ is a layer softer than the base metal steel sheet. Therefore, the smaller the $d_a$, the more likely the microstructure of the steel sheet surface layer in the weld is to be embrittled. It is therefore necessary to reduce the upper limit of Th. When the thickness (t) is small and the cooling rate of the weld is large, or when the Ts of the Si-containing galvanized steel sheet is high, the microstructure of the weld tends to be embrittled. It is therefore necessary to reduce the upper limit of Th.

For the reasons described above, the welding pressure holding time is the time satisfying formulas (5) and (6).

The lower limit of formula (5) is preferably longer than or equal to $(1 / d_a + t + TS / 1000) / 110 + 0.02$. The upper limit of formula (5) is preferably shorter than or equal to $\{-(1 / d_a + 1 / t + TS / 1000) / 65\} + 0.9$.

The lower limit of formula (6) is preferably 0.02 or longer. The upper limit of formula (6) is preferably 1.0 or shorter. When a sheet set including two or more overlapping Si-containing galvanized steel sheets each having the region A is used, it is only necessary that one of them satisfy formulas (5) and (6).

EXAMPLES

The operations and effects of the present invention will be described by way of Examples. However, the present invention is not limited to the following Examples.

Sheet sets shown in Table 1 were used to produce welded joints (welded members) under welding conditions shown in Table 2. In each sheet set, a steel sheet 1, a steel sheet 2, and a steel sheet 3 shown in Table 1 were sequentially disposed from the upper side so as to overlap each other. "GA" in the coating columns in Table 1 means a steel sheet having a hot-dip galvannealed layer, and "GI" means a steel sheet having a hot-dip galvanized layer. Each symbol shown in the "State immediately before pressurization" column corresponds to one of (a) to (e) shown in the welding work disturbances described above. The welder used was a servo motor pressing-type single-phase AC (50 Hz) resistance welder attached to a welding gun. The pair of electrode tips used were chromium-copper DR-type electrodes having a tip curvature radius R of 40 mm and a tip diameter of 6 mm.

In the "Tensile strength" columns in Table 1, the tensile strength (MPa) measured as follows is shown. A JIS No. 5 test piece for a tensile test was cut from one of the steel sheets in the rolling direction, and the tensile test was performed according to JIS Z 2241 to measure the tensile strength.

The TSS of each welded joint and the presence or absence of LME cracking were evaluated by methods described below. Methods described below were used to measure the thicknesses ($t_{all}$ and $t_{weld}$) in each welded joint and the thicknesses ($d_a$ $d_{wa}$) in the region A in the thickness direction.

<Measurement of thicknesses>

[$t_{all}$ and $t_{weld}$]

One of the produced welded joints was cut using a micro-cutter along a plane passing through the center of the weld, and a cross section in the thickness direction was observed. The total thickness ($t_{all}$) of the sheet set was determined by measuring the thicknesses of the steel sheets before welding and summing the thicknesses to compute the total thickness. The minimum thickness ($t_{weld}$) of the weld was determined by measuring the lengths in the thickness direction in a region extending in the width direction within the nugget at 100 $\mu$m intervals and determining the minimum value used as the "minimum thickness" (see Fig. 3). The obtained values were used to determine the value of "$t_{weld}/t_{all}$."

[$d_a$ and $d_{wa}$]

One of the produced welded joints was cut along a plane passing through the center of the weld, and a scanning electron microscope (SEM) and an energy dispersive X ray detector (EDX) were used to perform line analysis in the steel sheet surface layer within the base metal zone and in the steel sheet surface layer within the weld heat affected zone, and $d_a$ and $d_{wa}$ were determined.

Specifically, one of the produced welded joints was cut using a micro-cutter along a plane passing through the center of the weld and embedded in a resin. The cross section of the welded joint embedded in the resin was polished to prepare an observation specimen. Then the line analysis of the cross section of the specimen was performed at an observation magnification of 10000X and an acceleration voltage of 5 kV, and line profiles of Zn and Si concentrations extending from the steel sheet surface layers in the base metal zone and the weld heat affected zone in the thickness direction were obtained. The regions A having the Zn and Si concentrations described above were determined from the obtained concentration profiles, and the thicknesses of the regions A in the base metal zone and the weld heat affected zone were computed.

The values of each steel sheet shown in the "Evaluation steel sheet" column in Table 2 were used as representative values and shown in Table 2.

[Evaluation of TSS]

The tensile shear strength (TSS) was evaluated based on a tensile shear test method (JIS Z 3136). In the shear tensile test, shear tensile test pieces were cut from the steel sheets shown in Table 1. As for the size of each shear tensile test piece, the length in the widthwise direction was 50 mm, and the length in the longitudinal direction was 150 mm. Next, sheet sets shown in Table 1 were resistance-spot-welded under welding conditions shown in Table 3 to produce welded joints (test specimens) used for the test.

To make comparisons with the obtained test specimens (the welded joints produced by the welding method of the invention), comparative joints in which the region A was not controlled (i.e., welded joints in which no region A was present in the surface layer of the Si-containing steel sheet and the thickness of the region A in the base metal zone was $d_a = 0$) were also produced. The TSS of each comparative joint was also evaluated using the same tensile shear test method.

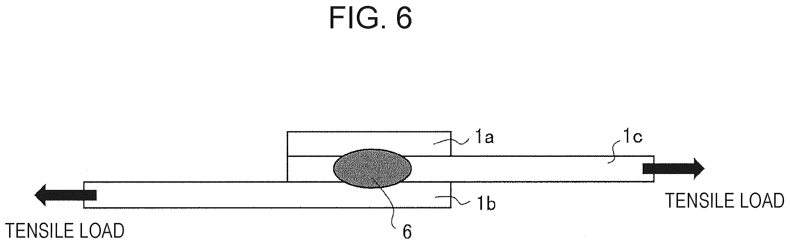

Each test specimen for the TSS evaluation had a shape specified in JIS Z 3136. In sheet sets including three overlapping sheets (such as sheet set No. H in Table 1), the evaluation was performed such that a tensile load was applied to the steel sheet 1b and the steel sheet 1c as shown in Fig. 6.

To produce the welded joints for TSS evaluation, only one welding point was used, and welding work disturbances such as the inclination angle and the sheet gap shown in Tables 2 and 3 were not provided.

The TSS was evaluated according to the following criteria.

<Evaluation criteria>

A: (the TSS of the welded joint produced by the welding method of the invention / the TSS of the comparative joint) $\geq 0.9$

B: $0.9 >$ (the TSS of the welded joint produced by the welding method of the invention / the TSS of the comparative joint) $\geq 0.8$

F: $0.8 >$ (the TSS of the welded joint produced by the welding method of the invention / the TSS of the comparative joint)

When the rating was "A" or "B", the test specimen was rated pass (had good shear tensile strength).

[Evaluation of LME cracking]

Welding was performed in a state with one or two or more of the welding work disturbances (a) to (e) described above. The obtained welded joint was cut using a micro-cutter along a plane passing through the center of the weld, and then a cross section of the weld in the thickness direction was observed. From the results of the observation, the presence or absence of LME cracking was evaluated according to criteria shown below. Specifically, 10 welded joints were produced under welding conditions shown in Table 3, and a cross-section of the steel sheets was observed on the steel sheet faying surface side to check LME cracking. The weld in each steel sheet shown in the "Evaluation steel sheet" column in Table 2 was used for the cross-sectional observation on the steel sheet faying surface side and evaluated.

<Evaluation criteria>

A: No cracking was found in all the ten welded joints.

B: The number of cracked welded joints was 2 or less, and the maximum cracking depth was less than 100 $\mu$m.

F: The number of cracked welded joints was 3 or more, or the maximum cracking depth was 100 $\mu$m or more.

When the rating was A or B, the welded joints were rated pass.

The values obtained and the evaluation results are shown in Tables 2 and 3.

[Table 1]

| Sheet set No. | Steel sheet 1 | | | | | | | | Steel sheet 2 | | | | | | | | Steel sheet 3 | | | | | | | |
|---|---|---|---|---|---|---|---|---|---|---|---|---|---|---|---|---|---|---|---|---|---|---|---|---|
| | Sheet thickness (mm) | Tensile strength (MPa) | Zn coated layer *1 | Fe-based precoated layer (g/m²) | Si internally oxidized layer (µm) | Region A in base metal zone | $d_a$ (µm) | Amount of Si in base metal (% by mass) | Sheet thickness (mm) | Tensile strength (MPa) | Zn coated layer *1 | Fe-based precoated layer (g/m²) | Si internally oxidized layer (µm) | Region A in base metal zone | $d_a$ (µm) | Amount of Si in base metal (% by mass) | Sheet thickness (mm) | Tensile strength (MPa) | Zn coated layer *1 | Fe-based precoated layer (g/m²) | Si internally oxidized layer (µm) | Region A in base metal zone | $d_a$ (µm) | Amount of Si in base metal (% by mass) |
| A | 1.6 | 980 | GA | 45 | None | Yes | 5.5 | 1.2 | 1.6 | 980 | GA | None | None | - | - | 1.2 | | | | | | | | |
| B | 1.2 | 1180 | GA | 10 | None | Yes | 0.9 | 1.5 | 1.2 | 1180 | GA | None | None | - | - | 1.5 | | | | | | | | |
| C | 2.0 | 1470 | GA | 17 | None | Yes | 2.1 | 1.0 | 2.0 | 1470 | GA | None | None | - | - | 1.0 | | | | | | | | |
| D | 1.6 | 980 | GA | 40 | None | Yes | 5.2 | 1.2 | 1.6 | 980 | GA | None | None | - | - | 1.2 | | | | | | | | |
| E | 1.4 | 980 | GA | 85 | None | Yes | 11 | 1.5 | 1.4 | 980 | GA | None | None | - | - | 1.5 | | | | | | | | |
| F | 1.4 | 980 | GA | 24 | None | Yes | 3.2 | 1.2 | 1.4 | 980 | GA | None | None | - | - | 1.2 | | | | | | | | |
| G | 1.6 | 1470 | GA | 30 | None | Yes | 3.8 | 3.1 | 1.6 | 1470 | GA | None | None | - | - | 1.2 | | | | | | | | |
| H | 0.7 | 270 | GA | None | None | None | - | < 0.001 | 1.4 | 980 | GA | None | None | - | - | 1.2 | 1.6 | 1180 | GA | 38 | None | Yes | 4.8 | 1.2 |
| I | 1.4 | 1180 | GI | 25 | None | Yes | 3.2 | 1.0 | 1.4 | 1180 | GI | None | None | - | - | 1.0 | | | | | | | | |
| J | 1.4 | 980 | GA | None | 3.4 | Yes | 3.5 | 1.4 | 1.4 | 980 | GA | None | None | - | - | 1.4 | | | | | | | | |
| K | 1.6 | 980 | GI | None | 2.8 | Yes | 2.9 | 0.9 | 1.6 | 980 | GI | None | None | - | - | 0.9 | | | | | | | | |
| L | 1.2 | 1180 | GA | None | 1.3 | Yes | 1.4 | 1.0 | 1.2 | 1180 | GA | None | None | - | - | 1.0 | | | | | | | | |
| M | 1.4 | 980 | GA | None | 0.9 | Yes | 1.0 | 1.2 | 1.4 | 980 | GA | None | None | - | - | 1.2 | | | | | | | | |
| O | 2.0 | 1180 | GA | 32 | None | Yes | 4.1 | 1.4 | 2.0 | 1180 | GA | None | None | - | - | 1.4 | | | | | | | | |
| P | 1.6 | 1470 | GA | 50 | None | Yes | 6.4 | 1.6 | 1.6 | 1470 | GA | None | None | - | - | 1.6 | | | | | | | | |
| Q | 1.6 | 980 | GA | 42 | None | Yes | 5.3 | 1.2 | 1.6 | 980 | GA | None | None | - | - | 1.2 | | | | | | | | |
| R | 1.4 | 1180 | GA | 25 | None | Yes | 3.3 | 1.6 | 1.4 | 1180 | GA | None | None | - | - | 1.6 | | | | | | | | |
| S | 1.6 | 980 | GA | 30 | None | Yes | 3.7 | 1.4 | 1.6 | 980 | GA | None | None | - | - | 1.4 | | | | | | | | |

*1. GA: Hot-dip galvannealed layer, GI: Hot-dip galvanized layer

[Table 2]

| Condition No. | Sheet set No. | $t_{weld}/t_{all}$ | Properties of steel sheet and weld | | | | | | | | Average shortest distance $H_1$ (mm) | Average of center-to-center distances between welding points $H_2$ (mm) | Number of welding points | Remarks |
|---|---|---|---|---|---|---|---|---|---|---|---|---|---|---|
| | | | Evaluation steel sheet | Sheet thickness t (mm) | Tensile strength TS (MPa) | Fe-based coated layer (g/m$^2$) | Si internally oxidized layer ($\mu$m) | Amount of Si in base metal in evaluation steel sheet (% by mass) | $d_a$ ($\mu$m) | $d_{wa}$ ($\mu$m) | | | | |
| 1 | A | 0.7 | Steel sheet 1 | 1.6 | 980 | 45 | - | 1.2 | 5.5 | 2.8 | 15 | - | 1 | Inventive Example |
| 2 | B | 0.8 | Steel sheet 1 | 1.2 | 1180 | 10 | - | 1.5 | 0.9 | - | 2 | 4 | 3 | Comparative Example |
| 3 | C | 0.9 | Steel sheet 1 | 2.0 | 1470 | 17 | - | 1.0 | 2.1 | - | 15 | - | 1 | Inventive Example |
| 4 | D | 0.4 | Steel sheet 1 | 1.6 | 980 | 40 | - | 1.2 | 5.2 | 2.6 | 15 | - | 1 | Comparative Example |
| 5 | E | 0.8 | Steel sheet 1 | 1.4 | 980 | 85 | - | 1.5 | 11.2 | 9.5 | 15 | - | 1 | Comparative Example |
| 6 | F | 0.7 | Steel sheet 1 | 1.4 | 980 | 24 | - | 1.2 | 3.2 | 1.3 | 4 | - | 1 | Inventive Example |
| 7 | G | 0.6 | Steel sheet 1 | 1.6 | 1470 | 30 | - | 3.1 | 3.8 | 2.0 | 15 | - | 1 | Comparative Example |
| 8 | H | 0.8 | Steel sheet 3 | 1.6 | 1180 | 38 | - | 1.2 | 4.8 | 1.2 | 15 | - | 1 | Inventive Example |
| 9 | I | 0.8 | Steel sheet 1 | 1.4 | 1180 | 25 | - | 1.0 | 3.2 | 1.4 | 15 | 25 | 2 | Inventive Example |
| 10 | J | 0.8 | Steel sheet 1 | 1.4 | 980 | - | 3.4 | 1.4 | 3.5 | 1.7 | 15 | 30 | 2 | Inventive Example |
| 11 | K | 0.7 | Steel sheet 1 | 1.6 | 980 | - | 2.8 | 0.9 | 2.9 | 0.5 | 6 | - | 1 | Inventive Example |
| 12 | L | 0.9 | Steel sheet 1 | 1.2 | 1180 | - | 1.3 | 1.0 | 1.4 | - | 15 | - | 1 | Comparative Example |

EP 4 563 275 A1

(continued)

| Condition No. | Sheet set No. | $t_{weld}/t_{all}$ | Properties of steel sheet and weld | | | | | | | | | Average shortest distance $H_1$ (mm) | Average of center-to-center distances between welding points $H_2$ (mm) | Number of welding points | Remarks |
|---|---|---|---|---|---|---|---|---|---|---|---|---|---|---|---|
| | | | Evaluation steel sheet | Sheet thickness t (mm) | Tensile strength TS (MPa) | Fe-based coated layer (g/m$^2$) | Si internally oxidized layer ($\mu$m) | Amount of Si in base metal in evaluation steel sheet (% by mass) | $d_a$ ($\mu$m) | $d_{wa}$ ($\mu$m) | | | | |
| 13 | M | 0.4 | Steel sheet 1 | 1.4 | 980 | - | 0.9 | 1.2 | 1.0 | - | 15 | - | 1 | Comparative Example |
| 14 | O | 0.7 | Steel sheet 1 | 2.0 | 1180 | 32 | - | 1.4 | 4.1 | 1.0 | 15 | - | 1 | Inventive Example |
| 15 | P | 0.8 | Steel sheet 1 | 1.6 | 1470 | 50 | - | 1.6 | 6.4 | 3.2 | 15 | - | 1 | Inventive Example |
| 16 | Q | 0.8 | Steel sheet 1 | 1.6 | 980 | 42 | - | 1.2 | 5.3 | 0.6 | 15 | - | 1 | Inventive Example |
| 17 | R | 0.8 | Steel sheet 1 | 1.4 | 1180 | 25 | - | 1.6 | 3.3 | 1.2 | 25 | - | 1 | Inventive Example |
| 18 | S | 0.7 | Steel sheet 1 | 1.6 | 980 | 30 | - | 1.4 | 3.7 | 1.5 | 20 | 55 | 2 | Inventive Example |

*1.
$$0.5 < t_{weld} / t_{all} < 1.0 \qquad (1)$$

*2.
$$2 < d_a < 10 \qquad (2)$$

*3.
$$0 < d_{wa} < 8 \qquad (3)$$

[Table 3]

| Condition No. | Sheet set No. | Welding Conditions | | | | | | | | | | Results | | Remarks |
|---|---|---|---|---|---|---|---|---|---|---|---|---|---|---|
| | | Energization step | | | | | Electrode holding step | | | | | TSS | LME | |
| | | State immediately before pressurization | | Welding pressure (kN) | Welding current (kA) | Energization time (S) | Electrode holding time Th (S) | Lower limit of formula (5) | Upper limit of formula (5) | Suitability of formula (5) | Suitability of formula (6) | | | |
| 1 | A | (a) (c) | Inclination angle: 7 degrees Gap between electrode and sheet: 1 mm | 4.0 | 6.5 | 0.40 | 0.250 | 0.025 | 0.973 | ○ | ○ | A | A | Inventive Example |
| 2 | B | (a) (e) | Inclination angle: 5 degrees Shortest distance to end face of steel sheets: 2 mm | 3.5 | 6.0 | 0.35 | 0.150 | 0.032 | 0.952 | ○ | ○ | A | F | Comparative Example |
| 3 | C | (a) | Inclination angle: 7 degrees | 5.0 | 8.0 | 0.50 | 0.250 | 0.036 | 0.962 | ○ | ○ | A | B | Inventive Example |
| 4 | D | (a) (c) | Inclination angle: 5 degrees Gap between electrode and sheet: 2 mm | 5.0 | 7.0 | 0.40 | 0.015 | 0.025 | 0.972 | × | ○ | A | F | Comparative Example |
| 5 | E | (a) (c) | Inclination angle: 5 degrees Gap between electrode and sheet: 2 mm | 4.5 | 6.0 | 0.45 | 0.250 | 0.022 | 0.973 | ○ | ○ | F | A | Comparative Example |
| 6 | F | (e) | Shortest distance to end face of steel sheets: 4 mm | 4.0 | 6.5 | 0.40 | 0.150 | 0.024 | 0.969 | ○ | ○ | A | A | Inventive Example |

EP 4 563 275 A1

18

| Condition No. | Sheet set No. | Welding Conditions | | | | | | | | | | Results | | Remarks |
|---|---|---|---|---|---|---|---|---|---|---|---|---|---|---|
| | | | | Energization step | | | | Electrode holding step | | | | | | |
| | | State immediately before pressurization | | Welding pressure (kN) | Welding current (kA) | Energization time (S) | Electrode holding time Th (S) | Lower limit of formula (5) | Upper limit of formula (5) | Suitability of formula (5) | Suitability of formula (6) | TSS | LME | |
| 7 | G | (a) (c) | Inclination angle: 5 degrees Gap between electrode and sheet: 2 mm | 4.5 | 7.0 | 0.45 | 0.020 | 0.030 | 0.964 | × | ○ | A | F | Comparative Example |
| 8 | H | (b) | Offset amount: :1 mm | 5.0 | 8.0 | 0.45 | 0.300 | 0.027 | 0.969 | ○ | ○ | A | A | Inventive Example |
| 9 | I | (d) | Gap between sheets: 3 mm | 5.5 | 6.5 | 0.30 | 0.200 | 0.026 | 0.966 | ○ | ○ | A | A | Inventive Example |
| 10 | J | (a) (d) | Inclination angle: 7 degrees Gap between sheets: 1 mm | 4.0 | 6.5 | 0.45 | 0.200 | 0.024 | 0.970 | ○ | ○ | A | A | Inventive Example |
| 11 | K | (a) (e) | Inclination angle: 5 degrees Shortest distance to end face of steel sheets: 6 mm | 3.5 | 6.5 | 0.45 | 0.150 | 0.027 | 0.970 | ○ | ○ | A | A | Inventive Example |
| 12 | L | (a) (d) | Inclination angle: 7 degrees Gap between sheets: 1.5 mm | 3.5 | 6.0 | 0.40 | 0.250 | 0.028 | 0.958 | ○ | ○ | A | F | Comparative Example |
| 13 | M | (a) (c) | Inclination angle: 7 degrees Gap between electrode and sheet: 2 mm | 3.5 | 8.5 | 0.40 | 0.015 | 0.031 | 0.959 | × | ○ | F | F | Comparative Example |

EP 4 563 275 A1

19

| Condition No. | Sheet set No. | State immediately before pressurization | | Welding pressure (kN) | Welding current (kA) | Energization time (S) | Electrode holding time Th (S) | Lower limit of formula (5) | Upper limit of formula (5) | Suitability of formula (5) | Suitability of formula (6) | TSS | LME | Remarks |
|---|---|---|---|---|---|---|---|---|---|---|---|---|---|---|
| | | **Welding Conditions** | | | | | | | | | | **Results** | | |
| | | Energization step | | | | | Electrode holding step | | | | | | | |
| 14 | O | (a) (d) | Inclination angle: 4 degrees Gap between sheets: 2 mm | 7.5 | 6.5 | 0.50 | 0.300 | 0.031 | 0.970 | ○ | ○ | A | A | Inventive Example |
| 15 | P | (a) | Inclination angle: 6 degrees | 5.0 | 11.8 | 0.35 | 0.350 | 0.029 | 0.965 | ○ | ○ | A | A | Inventive Example |
| 16 | Q | (a) (c) | Inclination angle: 5 degrees Gap between electrode and sheet: 1 mm | 6.0 | 5.0 | 1.20 | 0.200 | 0.025 | 0.972 | ○ | ○ | A | A | Inventive Example |
| 17 | R | (a) (d) | Inclination angle: 5 degrees Gap between sheets: 1 mm | 3.5 | 6.5 | 0.50 | 0.240 | 0.026 | 0.966 | ○ | ○ | A | A | Inventive Example |
| 18 | S | (a) | Inclination angle: 6 degrees | 4.0 | 7.0 | 0.45 | 0.250 | 0.026 | 0.971 | ○ | ○ | A | A | Inventive Example |

*1.

$$(1 / d_a + t + TS / 1000) / 110 < Th < \{-(1 / d_a + 1 / t + TS / 1000) / 65\} + 1 \quad (5)$$

*2.

$$0 < Th \quad (6)$$

As is clear from Table 3, the evaluation results for the welded joints (welded members) in Inventive Examples were all A or B. According to the present invention, the strength of the weld can be ensured, and also the occurrence of LME cracking can be prevented.

Reference Signs List

1a, 1b, 1c steel sheet
2 Si-containing galvanized steel sheet
2a galvanized layer
2b region A
2c Si-containing steel sheet (base metal)
4, 5 welding electrode
6 weld
6a nugget
6b weld heat affected zone
7 steel sheet faying surface
8 welding point
10 welded member

**Claims**

1. A welded member having a resistance spot weld formed by resistance-spot-welding a sheet set including two or more overlapping steel sheets,

   wherein a total thickness of the sheet set is denoted as $t_{all}$ (mm), wherein a minimum thickness of the resistance spot weld is denoted as $t_{weld}$ (mm), wherein $t_{all}$ and $t_{weld}$ satisfy formula (1),
   wherein at least one of the two or more steel sheets is a Si-containing galvanized steel sheet containing 0.5 to 3.0% by mass of Si,
   wherein, in the Si-containing galvanized steel sheet, a region in which a Zn concentration is 5.0% by mass or less and a Si concentration is less than 0.5% by mass is defined as a region A, and a thickness of the region A in a thickness direction within a base metal zone is denoted as $d_a$ (um), wherein the region A is formed below a galvanized layer, and wherein $d_a$ satisfies formula (2):

   $$0.5 < t_{weld} / t_{all} < 1.0, \qquad (1)$$

   $$2 < d_a < 10. \qquad (2)$$

2. The welded member according to claim 1, wherein, in the resistance spot weld in the Si-containing galvanized steel sheet, the thickness of the region A in the thickness direction at a position located in a corona bond and spaced 200 μm from an edge of a nugget in a direction toward the base metal zone is denoted as $d_{wa}$ (μm), and $d_{wa}$ satisfies formula (3):

   $$0 < d_{wa} < 8. \qquad (3)$$

3. The welded member according to claim 1 or 2, wherein the Si-containing galvanized steel sheet includes an Fe-based coated layer within the region A.

4. The welded member according to any one of claims 1 to 3, wherein a tensile strength of the steel sheet is denoted as TS (MPa), and

   wherein, in the Si-containing galvanized steel sheet, TS ≥ 980.

5. The welded member according to any one of claims 1 to 4, wherein an average of a shortest distance from a center of a welding point of the resistance spot weld to an end face of the steel sheets is 3 mm or more, and

wherein, when the welded member has a plurality of the welding points, an average of center-to-center distances between adjacent ones of the welding points is 6 mm or more.

6. A method for producing the welded member according to any one of claims 1 to 5, the method comprising:

a preparation step of disposing the two or more steel sheets so as to overlap each other to form the sheet set; and a welding step of resistance-spot-welding the sheet set,
wherein, in the welding step,
the sheet set is held between a pair of welding electrodes to perform energization for joining under application of pressure, and
one or two or more of states (a) to (e) are satisfied at at least one welding point immediately before the application of the pressure by the welding electrodes,
wherein the welding step includes
an energization step of performing the energization at a welding pressure of 2.0 to 10.0 kN and a welding current of 4.0 to 15.0 kA for an energization time of 0.1 to 2.0 S and
an electrode holding step in which, when a welding pressure holding time after completion of the energization is denoted as Th (S), Th satisfies the relation of formulas (5) and (6):

(a) a state in which an inclination angle between the welding electrodes and the overlapping steel sheets is 0.2 degrees or more;
(b) a state in which an amount of offset between the pair of welding electrodes is 0.1 mm or more;
(c) a state in which a gap of 0.5 mm or more is present between one of the welding electrodes and the overlapping steel sheets;
(d) a state in which a gap of 0.5 mm or more is present between at least one pair of steel sheets among the overlapping steel sheets; and
(e) a state in which a shortest distance from a center of the at least one welding point to a steel sheet end face of the overlapping steel sheets is 10 mm or less:

$$(1 / d_a + t + TS / 1000) / 110 < Th < \{-(1 / d_a + 1 / t + TS / 1000) / 65\} + 1, (5) \tag{5}$$

$$0 < Th, \tag{6}$$

where, in formula (5), $d_a$ is the thickness ($\mu$m) of the region A in the thickness direction within the base metal zone, t is a thickness (mm) of the Si-containing galvanized steel sheet, and TS is a tensile strength (MPa) of the Si-containing galvanized steel sheet.

FIG. 1

FIG. 2

# FIG. 3

FIG. 4

FIG. 5

EP 4 563 275 A1

# FIG. 6

TENSILE LOAD

1a

1c

1b

6

TENSILE LOAD

# FIG. 7

CRACK

4

1a

1b

5

## INTERNATIONAL SEARCH REPORT

| International application No. |
| --- |
| **PCT/JP2023/033593** |

| A. | CLASSIFICATION OF SUBJECT MATTER |
| --- | --- |

***B23K 11/16***(2006.01)i; ***B23K 11/11***(2006.01)i
FI:   B23K11/16 311; B23K11/11 540

According to International Patent Classification (IPC) or to both national classification and IPC

| B. | FIELDS SEARCHED |
| --- | --- |

Minimum documentation searched (classification system followed by classification symbols)

B23K11/16; B23K11/11

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/097736 A1 (JFE STEEL CORPORATION) 12 May 2022 (2022-05-12)<br>entire text, all drawings | 1-6 |
| A | JP 2012-102370 A (NIPPON STEEL CORP) 31 May 2012 (2012-05-31)<br>entire text, all drawings | 1-6 |
| A | WO 2022/097734 A1 (JFE STEEL CORPORATION) 12 May 2022 (2022-05-12)<br>entire text, all drawings | 1-6 |
| A | JP 2019-906 A (TOYOTA MOTOR CORP) 10 January 2019 (2019-01-10)<br>entire text, all drawings | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 October 2023** | **31 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033593**

| Patent document cited in search report | | | Publication date (day/month/year) | Patent family member(s) | | | Publication date (day/month/year) |
|---|---|---|---|---|---|---|---|
| WO | 2022/097736 | A1 | 12 May 2022 | KR 10-2023-0085193 entire text, all drawings | A | | |
| JP | 2012-102370 | A | 31 May 2012 | (Family: none) | | | |
| WO | 2022/097734 | A1 | 12 May 2022 | KR 10-2023-0085192 entire text, all drawings | A | | |
| JP | 2019-906 | A | 10 January 2019 | US 2018/0361508 entire text, all drawings CN 109128464 | A1 A | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10195597 A
- JP 2003103377 A
- JP 2003236676 A